# EUROPÄISCHE PATENTSCHRIFT

(11) **EP 3 450 211 B1**
(45) Veröffentlichungstag und Bekanntmachung des Hinweises auf die Patenterteilung: **15.04.2020**
(21) Anmeldenummer: 18173504.4
(22) Anmeldetag: 22.05.2018
(51) Int. Cl.: B60C 11/04, B60C 11/00, B60C 11/03

(54) **FAHRZEUGLUFTREIFEN**
PNEUMATIC TYRES FOR A VEHICLE
PNEUMATIQUE DE VÉHICULE

(30) Priorität: 30.08.2017 DE 102017215186
(43) Veröffentlichungstag der Anmeldung: 06.03.2019
(73) Patentinhaber: Continental Reifen Deutschland GmbH, 30165 Hannover (DE)
(72) Erfinder: Behr, Ulrich, 30167 Hannover (DE)
(74) Vertreter: Finger, Karsten

(56) Entgegenhaltungen:
- EP-A1- 2 444 257
- WO-A1-2016/082948

## Beschreibung

Die Erfindung betrifft einen Fahrzeugluftreifen in Radialbauart mit einem profilierten, Rillen aufweisenden Laufstreifen, wobei eine entlang der Rillengründe von Rillen verlaufende Einhüllende eine über den Umfang des Laufstreifens gleichbleibende Unterzugskontur bildet, wobei die Unterzugskontur in axialer Richtung und über die Erstreckung der Bodenaufstandsflächenbreite des Laufstreifens, welche mit einem auf einer Normfelge montierten Reifen, einer Last von 70 % der maximalen Tragfähigkeit und einem Innendruck von 85 % des Normdruckes gemäß ETRTO-Standards ermittelt ist, in einer Wellenform verläuft, welche sich aus zumindest drei Erhebungen zusammensetzt, wobei sich die in radialer Richtung tiefsten Stellen der Wellentäler zwischen den Erhebungen auf Profiltiefe befinden und wobei die in radialer Richtung höchsten Stellen der Erhebungen zur Laufstreifenperipherie einen Abstand von 1,0 mm bis 3,0 mm aufweisen und wobei die Wellenform der Unterzugskontur drei bezüglich der Äquatorialebene des Reifens spiegelsymmetrisch verlaufende Erhebungen aufweist.

Die Unterzugskontur ist üblicherweise eine im Wesentlichen kreiszylindermantelförmig über den Umfang des Laufstreifens entlang der Rillengründe bzw. tiefsten Stellen von Rillen verlaufende Einhüllende, wobei radial innerhalb dieser Einhüllenden keine Rillen mehr vorhanden sind.

Ein Fahrzeugluftreifen eingangs genannter Art, welcher ein Nutzfahrzeugreifen ist, ist aus der EP 2 444 257 A1 bekannt. Der Laufstreifen dieses Fahrzeugluftreifens weist vier gerade verlaufende Umfangsrillen auf, welche Profilrippen voneinander trennen. In den Profilrippen verlaufen seichter als die Umfangsrillen ausgeführte Nuten mit einer Tiefe von 0,5 mm bis 3,0 mm, sodass der Laufstreifen eine Unterzugskontur mit einer in axialer Richtung und über die Erstreckung der Breite der Bodenaufstandsfläche des Laufstreifens verlaufenden Wellenform aufweist.

Ferner ist auch aus der WO 2016/082948 A1 ein Fahrzeugluftreifen eingangs genannter Art bekannt. Der Laufstreifen dieses Fahrzeugluftreifens ist mit vier Umfangsrillen versehen, welche Profilrippen voneinander trennen, wobei in den mittleren Profilrippen seichte Rillen verlaufen, welche endseitig in eine innerhalb der Profilrippe liegende halbkugelförmige Vertiefung einmünden.

Aus der DE 10 2012 107 565 A1 ist ein Fahrzeugluftreifen bekannt, bei dem diese Unterzugskontur als erste Unterzugskontur bezeichnet ist, die von einer zweiten Unterzugskontur überlagert ist, die lokal aus flachen Erhebungen besteht, die eine gewisse Erstreckung sowohl in axialer Richtung als auch in Umfangsrichtung aufweisen und fließende Übergänge zur ersten Unterzugskontur aufweisen. Diese Wölbungen werden bezüglich ihrer Ausdehnung und Dimensionierung derart ausgelegt, dass der Reifen beim Abrollen mit einer bestimmten Umfangsgeschwindigkeit Schwingungen generiert, die zumindest eines der vorab festgestellten und durch die Pitchfolge der Profilstrukturen verursachten Maxima im Frequenzspektrum des Abrollgeräusches vermindert.

Üblicherweise wird jedoch die Unterzugskontur, wie oben erwähnt, ohne Wölbungen oder Verformungen ausgelegt, wobei durch die leichten Rundungen der Laufstreifenperipherie in ihren schulterseitigen Randbereichen der Abstand der Laufstreifenperipherie zur Unterzugskontur in diesen Bereichen geringer wird, sodass beispielsweise Querrillen, die in schulterseitigen Profilblöcken verlaufen, eine Richtung Laufstreifenrand abnehmende Tiefe aufweisen.

Durch die Ausgestaltung der Profilierung des Laufstreifens, etwa die Anordnung und der Verlauf der Rillen, die Dimensionierung der von diesen Rillen umlaufenen Profilblöcke, die Ausbildung von Einschnitten innerhalb von Profilblöcken oder Profilrippen, kann gezielt Einfluss auf die Umfangs- und Quersteifigkeit des Laufstreifens genommen werden, insbesondere um erwünschte Handlingeigenschaften, einen gleichmäßigen Abrieb, ein gutes Wasserdrainagevermögen und dergleichen zu erreichen.

Fahrzeugluftreifen, insbesondere Reifen für Personenkraftwagen, weisen meist eine von Profilblöcken oder blockartigen Strukturen dominierte Profilierung auf. Die diese Blöcke und blockartigen Strukturen umgebenden oder begrenzenden Rillen, vor allem Umfangsrillen, Querrillen und Schrägrillen, sorgen für die Wasserableitung auf nassem Untergrund und bestimmen die Aquaplaningeigenschaften des Fahrzeugluftreifens. Laufstreifenprofilierungen sind oft in bestimmten Umfangsbereichen im Vergleich zu den dazwischenliegenden Bereichen vergleichsweise weich, sodass eine Stabilisierung bzw. Versteifung des Laufstreifens in manchen Umfangsbereichen wünschenswert ist. Die bislang üblichen Maßnahmen zur gezielten Stabilisierung von Umfangsbereichen gehen jedoch meist zu Lasten der Wasserableiteigenschaften und damit der Aquaplaningeigenschaften des Reifens.

Der Erfindung liegt somit die Aufgabe zugrunde, eine Lösung für dieses Problem aufzufinden und den Laufstreifen in bestimmten Umfangsbereichen gezielt zu stabilisieren ohne die Aquaplaningeigenschaften zu beeinträchtigen.

Gelöst wird die gestellte Aufgabe erfindungsgemäß dadurch, dass die mittlere der drei Erhebungen eine Breite von 50 % bis 60 % der Bodenaufstandsflächenbreite des Laufstreifens aufweist, wobei die Breite als axialer Abstand der tiefsten Stellen der Wellentäler zwischen den Erhebungen ermittelt wird.

Die Unterzugskontur bestimmt den Tiefenverlauf der meisten in der Laufstreifenprofilierung vorgesehenen Rillen, wobei zwar Rillen vorhanden sein können, die oberhalb der Unterzugskontur verlaufen, jedoch keine, die unterhalb der Unterzugskontur verlaufen. Es liegt im Bereich der Erhebungen ein entsprechend angepasster Tiefenverlauf der Rillen vor, wodurch lokal eine Stabilisierung des Laufstreifens bzw. seiner Profilpositive erfolgt, wobei durch die Wellenform zwischen den Erhebungen Wellentäler und abfallende Flanken der Erhebungen vorhanden sind, die einen Rillenverlauf und eine Rillenanordnung gestatten, die eine gute Wasserableitung auf nassem Untergrund sicherstellen können.

Bei den üblichen Laufstreifenprofilausgestaltungen mit gleichen bzw. gleichartigen Profilstrukturen in beiden Laufstreifenhälften ist der Laufstreifen oft in der Mitte des Profils und in den beiden seitlichen Bereichen im Vergleich zu den dazwischen befindlichen Bereichen zu weich. Mit einer Unterzugskontur mit drei wellenförmig verlaufenden Erhebungen kann nun gezielt im mittleren und den beiden seitlichen Umfangsbereichen eine Stabilisierung bzw. Erhöhung der Steifigkeit der Profilpositive erreicht werden.

Bei einer bevorzugten Ausführungsform der Erfindung verläuft die Unterzugskontur bezüglich der Äquatorialebene des Reifens spiegelsymmetrisch. Eine derartige Ausgestaltung der Unterzugskontur ist bei den üblichen symmetrischen Profilierungen von Laufstreifen vorteilhaft. Es kann jedoch auch eine Ausführung zweckmäßig sein, bei der die Unterzugskontur eben nicht spiegelsymmetrisch bezüglich der Äquatorialebene verläuft. Diese Ausführung ist vor allem bei jenen Profilierungen von Laufstreifen von Vorteil, die sogenannte asymmetrische Profilierungen sind, bei welchen daher beispielsweise in der einer Laufstreifenhälfte Profilstrukturen vorhanden sind, die sich von jenen in der anderen Laufstreifenhälfte unterscheiden. Die Erhebungen können somit gezielt bei bestimmten Umfangsbereichen vorgesehen werden, um dort die Stabilität bzw. Steifigkeit der Profilpositive zu beeinflussen.

Bei PKW-Reifen weist die bevorzugte Ausführung der Unterzugskontur bis zu fünf Erhebungen auf, wobei jede Erhebung eine Mindestbreite von 15 % der Bodenaufstandsflächenbreite aufweisen sollte, wobei die Breiten der Erhebungen entweder zwischen den tiefsten Stellen einander benachbarte Wellentäler oder zwischen den am weitesten laufstreifenaußenseitig befindlichen Wellentälern und den seitlichen Rändern der Bodenaufstandsfläche ermittelt werden.

Bevorzugt weisen die seitlichen Erhebungen jeweils eine Breite von 20 % bis 30 % der Bodenaufstandsflächenbreite auf, wobei die Breite jeweils als axialer Abstand der tiefsten Stelle des Wellentals neben der mittleren Erhebung zum seitlichen Rand der Bodenaufstandsflächenbreite ermittelt wird.

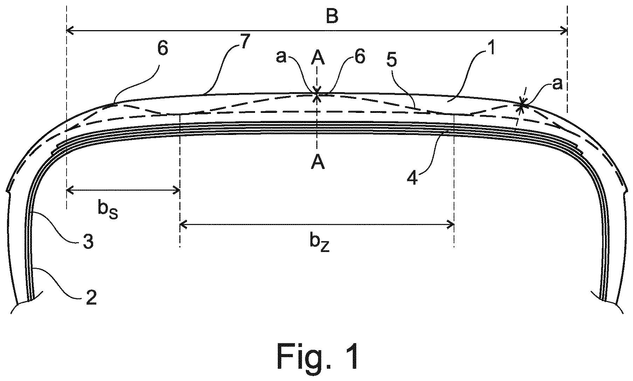

Weitere Merkmale, Vorteile und Einzelheiten der Erfindung werden nun anhand der schematischen Zeichnung, die ein Ausführungsbeispiel darstellt, näher beschrieben. Dabei zeigt die einzige Figur, Fig. 1, einen Querschnitt durch den Laufstreifenbereich eines Fahrzeugluftreifens.

In Fig. 1 ist ein Querschnitt im Laufstreifenbereich eines Fahrzeugluftreifens in Radialbauart für Personenkraftwagen, Vans oder Light-Trucks im Bereich des Laufstreifens 1 dargestellt. Abgesehen vom Laufstreifen 1 sind die radial innerhalb des Laufstreifens 1 üblicherweise vorgesehenen Reifenbauteile dargestellt, zu welchen eine Innenschicht 2, eine Radialkarkasse 3 und ein mehrlagiger Gürtelverband 4 gehören. Der Laufstreifen 1 ist mit einer Profilierung versehen, die nicht Gegenstand der Erfindung und daher nicht dargestellt ist und die von Rillen begrenzte oder umlaufene Profilpositive, insbesondere Profilblöcke oder Profilrippen, gegebenenfalls auch innerhalb der Profilpositive verlaufende schmale Einschnitte, aufweist. Rillen weisen eine Breite ≥ 1,5 mm auf, Einschnitte eine Breite < 1,5 mm.

Die Erfindung befasst sich mit einer besonderen Ausgestaltung der sogenannten und in Fig. 1 als gestrichelte Linie innerhalb des Laufstreifens 1 eingezeichneten Unterzugskontur 5. Die gestrichelte Linie innerhalb der Unterzugskontur 5 im Laufstreifen gibt den Verlauf einer üblichen Unterzugskontur wieder. Die Unterzugskontur 5 wird vorab festgelegt und ist eine über den Reifenumfang vorlaufende Einhüllende, welche den Tiefenverlauf von Rillen bestimmt und daher entlang der in radialer Richtung tiefsten Stellen von Rillengründen von in der Profilierung vorhandenen Rillen - Umfangsrillen, Querrillen, Schrägrillen und dergleichen - verläuft. Die Unterzugskontur 5 bleibt über den gesamten Umfang des Reifens unverändert, der Tiefenverlauf von Umfangsrillen, Querrillen, Schrägrillen und dergleichen ist an den Verlauf der Unterzugskontur 5 angepasst. Querrillen im Laufstreifen können daher über ihre axiale Erstreckung eine entsprechend des Verlaufes der Unterzugskontur 5 variierende Tiefe aufweisen. Umfangsrillen, die beispielsweise gerade in Umfangsrichtung umlaufen, können, je nachdem an welcher Stelle der Unterzugskontur 5 sie positioniert sind, einen Rillengrund aufweisen, welcher im Querschnitt in axialer Richtung leicht ansteigend bzw. schräg verläuft.

Die Unterzugskontur 5 weist innerhalb der Bodenaufstandsflächenbreite B (Footprintbreite, ermittelt mit einem auf einer Normfelge montierten Reifen, Last bei 70 % der maximalen Tragfähigkeit, Innendruck 85 % des Normdruckes, gemäß ETRTO-Standards) drei Erhebungen 6 auf, die der Unterzugskontur 5 in axialer Richtung eine Wellenform verleihen. Die Unterzugskontur 5 und damit auch die Erhebungen 6 sind symmetrisch zur Äquatorialebene A-A des Reifens ausgebildet. Die tiefsten Stellen der Wellentäler befinden sich in einer Tiefe, die der Profiltiefe entspricht - der maximalen Tiefe von Rillen, die bei PKW-Reifen 6,5 mm bis 9,0 mm beträgt. Die mittlere, zentrale Erhebung 6 weist zwischen den tiefsten Stellen der auf diese Erhebung 6 folgenden Wellentäler eine Breite bz von 50 % bis 60 % der Bodenaufstandsflächenbreite B auf. Jede seitliche Erhebung 6 weist daher eine Breite b_{S} von 20 % bis 30 % der Bodenaufstandsflächenbreite B auf. Die Breite bs wird jeweils als axialer Abstand der tiefsten Stelle des Wellentals zwischen den drei Erhebungen 6 zum Rand der Bodenaufstandsflächenbreite B ermittelt. In Fig. 1 ist ferner die Laufstreifenperipherie 7, ebenfalls als Einhüllende und daher als eine durchgehende Linie, eingezeichnet. Die in radialer Richtung ermittelten höchsten Stellen der Erhebungen 6 weisen einen Abstand a von 1,0 mm bis 3,0 mm zur Laufstreifenperipherie 7 auf. Bei der dargestellten bevorzugten Ausführung ist dabei der Abstand a der höchsten Stelle der zentralen Erhebung 6 zur Laufstreifenperipherie 7 um mindestens 1,0 mm größer als der Abstand a der höchsten Stellen der schulterseitigen Erhebungen 6 zur Laufstreifenperipherie 7. Bei einer besonders bevorzugten Ausführungsvariante beträgt der Abstand a der höchsten Stelle der zentralen Erhebung 6 zur Laufstreifenperipherie 7 2,0 mm, der höchsten Stellen der schulterseitigen Erhebungen 6 zur Laufstreifenperipherie 7 1,0 mm. Außerhalb der Bodenaufstandsflächenbreite B entspricht der Verlauf der Unterzugskontur 5 vorzugsweise dem in diesem Bereich üblichen Verlauf, in diesem Bereich wird der Abstand zwischen der Laufstreifenperipherie 7 und der Unterzugskontur 5 geringer.

Bei weiteren, gesondert nicht dargestellten Ausführungsformen kann die Unterzugskontur mehr als drei Erhebungen, insbesondere vier oder fünf Erhebungen, in Wellenform verlaufend, aufweisen. Bei fünf Erhebungen weisen diese vorzugsweise jeweils eine Breite von 20 % der Bodenaufstandsflächenbreite B auf, wobei die Mindestbreite einer Erhebung in der Unterzugskontur 5 15 % der Bodenaufstandsflächenbreite B ist. Diese Breiten werden analog zu den Breiten b_{S} und b_{Z} ermittelt.

Die entlang der Erhebungen verlaufenden Rillen und gegebenenfalls auch vorhandene Einschnitte weisen einen entsprechenden Tiefenverlauf auf. Dadurch wird die Steifigkeit des Laufstreifens über die Laufstreifenbreite in Umfangsbereichen variiert, im Bereich der Erhebungen steigt sie bzw. ist größer, im Bereich der Täler zwischen den Erhebungen ist sie geringer bzw. sie nimmt in Richtung zu den tiefsten Stellen der Täler ab. Auf diese Weise kann in Abstimmung mit der Profilausgestaltung, insbesondere einem Verlauf von Rillen entlang der Flanken der Erhebungen in Richtung Wellentäler, vor allem auch eine günstige Wasserableitung durch die Rillen hindurch erzielt werden.

### Bezugszeichenliste

- 1: Laufstreifen
- 2: Innenschicht
- 3: Radialkarkasse
- 4: Gürtelverband
- 5: Unterzugskontur
- 6: Erhebung
- 7: Laufstreifenperipherie
- a: Abstand
- A-A: Äquatorialebene
- B: Laufstreifenbreite
- b_{Z}, b_{S}: Breite

## Patentansprüche

1. Fahrzeugluftreifen in Radialbauart mit einem profilierten, Rillen aufweisenden Laufstreifen (1), wobei eine entlang der Rillengründe von Rillen verlaufende Einhüllende eine über den Umfang des Laufstreifens (1) gleichbleibende Unterzugskontur (5) bildet, wobei die Unterzugskontur (5) in axialer Richtung und über die Erstreckung der Bodenaufstandsflächenbreite (B) des Laufstreifens (1), welche mit einem auf einer Normfelge montierten Reifen, einer Last von 70 % der maximalen Tragfähigkeit und einem Innendruck von 85 % des Normdruckes gemäß ETRTO-Standards ermittelt ist, in einer Wellenform verläuft, welche sich aus zumindest drei Erhebungen (6) zusammensetzt" wobei sich die in radialer Richtung tiefsten Stellen der Wellentäler zwischen den Erhebungen (6) auf Profiltiefe befinden und wobei die in radialer Richtung höchsten Stellen der Erhebungen (6) zur Laufstreifenperipherie einen Abstand (a) von 1,0 mm bis 3,0 mm aufweisen und wobei die Wellenform der Unterzugskontur (5) drei bezüglich der Äquatorialebene (A-A) des Reifens spiegelsymmetrisch verlaufende Erhebungen (6) aufweist,
**dadurch gekennzeichnet,**
**dass** die mittlere der drei Erhebungen (6) eine Breite (b_{Z}) von 50 % bis 60 % der Bodenaufstandsflächenbreite (B) des Laufstreifens (1) aufweist, wobei die Breite (b_{Z}) als axialer Abstand (a) der tiefsten Stellen der Wellentäler zwischen den Erhebungen (6) ermittelt wird.

2. Fahrzeugluftreifen nach Anspruch 1, **dadurch gekennzeichnet, dass** die Unterzugskontur (5) bezüglich der Äquatorialebene (A-A) des Reifens spiegelsymmetrisch verläuft.

3. Fahrzeugluftreifen nach Anspruch 1 oder 2, **dadurch gekennzeichnet, dass** die Unterzugskontur (5) bis zu fünf Erhebungen aufweist, wobei jede Erhebung eine Mindestbreite von 15 % der Bodenaufstandsflächenbreite (B) aufweist, wobei diese Breiten entweder zwischen den tiefsten Stellen einander benachbarter Wellentäler oder zwischen den am weitesten laufstreifenaußenseitig befindlichen Wellentälern und den seitlichen Rändern der Bodenaufstandsflächenbreite (B) ermittelt werden.

4. Fahrzeugluftreifen nach einem der Ansprüche 1 bis 3, **dadurch gekennzeichnet, dass** die seitlichen Erhebungen (6) jeweils eine Breite (b_{S}) von 20 % bis 30 % der Bodenaufstandsflächenbreite (B) aufweisen, wobei die Breite (b_{S}) jeweils als axialer Abstand (a) der tiefsten Stelle des Wellentals neben der mittleren Erhebung zum seitlichen Rand der Bodenaufstandsflächenbreite (B) ermittelt wird.

## Claims

1. Pneumatic vehicle tyre of a radial type of construction, with a profiled tread (1) comprising grooves, an envelope that extends along the bases of the grooves forming a reinforcing contour (5) that remains the same over the circumference of the tread (1), the reinforcing contour (5) running in the axial direction and over the extent of the width of the ground contact area (B) of the tread (1), which is determined with a tyre fitted on a standardized rim, a load of 70% of the maximum load-bearing capacity and an internal pressure of 85% of the standard pressure according to ETRTO standards, and runs in the form of a wave that is made up of at least three elevations (6), the lowest points in the radial direction of the wave troughs between the elevations (6) being at the profile depth and the highest points in the radial direction of the elevations (6) being at a distance (a) of 1.0 mm to 3.0 mm from the periphery of the tread and the waveform of the reinforcing contour (3) having three elevations (6) running mirror-symmetrically with respect to the equatorial plane (A-A) of the tyre,
**characterized**
**in that** the middle of the three elevations (6) has a width (b_{z}) of 50% to 60% of the width of the ground contact area (B) of the tread (1), the width (b_{z}) being determined as the axial distance (a) of the lowest point of the wave troughs between the elevations (6).

2. Pneumatic vehicle tyre according to Claim 1, **characterized in that** the reinforcing contour (5) runs mirror-symmetrically with respect to the equatorial plane (A-A) of the tyre.

3. Pneumatic vehicle tyre according to Claim 1 or 2, **characterized in that** the reinforcing contour (5) has up to five elevations, each elevation having a minimum width of 15% of the width of the ground contact area (B), these widths being determined either between the lowest points of wave troughs adjacent to one another or between the wave troughs furthest to the outside of the tread and the lateral edges of the width of the ground contact area (B).

4. Pneumatic vehicle tyre according to one of Claims 1 to 3, **characterized in that** the lateral elevations (6) respectively have a width (bₛ) of 20% to 30% of the width of the ground contact area (B), the width (bₛ) being determined in each case as the axial distance (a) of the lowest point of the wave trough next to the middle elevation from the lateral edge of the width of the ground contact area (B).

## Revendications

1. Pneumatique de véhicule de construction radiale, comprenant une bande de roulement profilée (1) présentant des rainures, une extrémité d'enveloppement s'étendant le long du fond de rainure des rainures formant un contour de sous-couche (5) uniforme sur la périphérie de la bande de roulement (1), le contour de sous-couche (5), dans la direction axiale et sur l'étendue de la largeur de la surface d'appui au sol (B) de la bande de roulement (1) qui est déterminée selon la norme ETRTO avec un pneu monté sur une jante standard, une charge de 70 % de la capacité de charge admissible maximale et une pression interne de 85 % de la pression standard, s'étendant avec une forme ondulée qui se compose d'au moins trois rehaussements (6), les endroits les plus bas dans la direction radiale des creux d'ondulations entre les rehaussements (6) se trouvant à la profondeur du profilé et les endroits les plus hauts dans la direction radiale des rehaussements (6) par rapport à la périphérie de la bande de roulement présentant une distance (a) de 1,0 mm à 3,0 mm et la forme ondulée du contour de sous-couche (5) présentant trois rehaussements (6) s'étendant par rapport au plan équatorial (A-A) du pneu avec une symétrie spéculaire,
**caractérisé en ce que**
le rehaussement central parmi les trois rehaussements (6) présente une largeur (b_{z}) de 50 % à 60 % de la largeur de la surface d'appui au sol (B) de la bande de roulement (1), la largeur (b_{z}) étant déterminée en tant que distance axiale (a) des endroits les plus bas des creux d'ondulations entre les rehaussements (6).

2. Pneumatique de véhicule selon la revendication 1, **caractérisé en ce que** le contour de sous-couche (5) s'étend avec une symétrie spéculaire par rapport au plan équatorial (A-A) du pneu.

3. Pneumatique de véhicule selon la revendication 1 ou 2, **caractérisé en ce que** le contour de sous-couche (5) présente jusqu'à cinq rehaussements, chaque rehaussement présentant une largeur minimale de 15 % de la largeur de la surface d'appui au sol (B), ces largeurs étant déterminées soit entre les endroits les plus bas de creux d'ondulations mutuellement adjacents soit entre les creux d'ondulations se trouvant le plus loin du côté extérieur de la bande de roulement et les bords latéraux de la largeur de la surface d'appui au sol (B).

4. Pneumatique de véhicule selon l'une quelconque des revendications 1 à 3, **caractérisé en ce que** les rehaussements latéraux (6) présentent chacun une largeur (bₛ) de 20 % à 30 % de la largeur de la surface d'appui au sol (B), la largeur (bₛ) étant déterminée à chaque fois en tant que distance axiale (a) de l'endroit le plus bas du creux d'ondulation à côté du rehaussement central par rapport au bord latéral de la largeur de la surface d'appui au sol (B).
